# EUROPEAN PATENT SPECIFICATION

(11) **EP 3 043 058 B1**
(45) Date of publication and mention of the grant of the patent: **15.11.2023**
(21) Application number: 16150651.4
(22) Date of filing: 08.01.2016
(51) Int. Cl.: F02K 3/06, F02C 3/107

(54) **GEARED TURBOFAN ENGINE WITH POWER DENSITY RANGE**
KOMPAKTES TURBOFANTRIEBWERK MIT EINEM GETRIEBE
MOTEUR À DOUBLE FLUX COMPACT À ENGRENAGE

(30) Priority: 09.01.2015 US 201514593056
(43) Date of publication of application: 13.07.2016
(73) Proprietor: RTX Corporation, Farmington, CT 06032 (US)
(72) Inventor: SCHWARZ, Frederick M., Glastonbury, CT Connecticut 06033 (US); KUPRATIS, Daniel Bernard, Wallingford, CT Connecticut 06492 (US)
(74) Representative: Dehns

(56) References cited:
- US-A1- 2013 186 058
- US-A1- 2013 255 219
- US-A1- 2013 259 653

## Description

### BACKGROUND OF THE INVENTION

This application relates to a geared turbofan gas turbine engine, wherein the low and high pressure spools rotate in the same direction relative to each other.

Gas turbine engines are known, and typically include a fan delivering air into a compressor section, and outwardly as bypass air to provide propulsion. The air in the compressor is delivered into a combustion section where it is mixed with fuel and burned. Products of this combustion pass downstream over turbine rotors, driving them to rotate. Typically there are low and high pressure compressors, and low and high pressure turbines.

The high pressure turbine typically drives the high pressure compressor as a high spool, and the low pressure turbine drives the low pressure compressor and the fan. Historically, the fan and low pressure compressor were driven at a common speed.

More recently, a gear reduction has been provided on the low pressure spool such that the fan and low pressure compressor can rotate at different speeds. It desirable to have more efficient engines that have more compact turbines to limit efficiency loses.

A prior art engine, having the features of the preamble of claim 1, is disclosed in US-2013/0259653. Other prior art engines are disclosed in US-2013/255219 and US-2013/186058. EP 3 039 276 A1, which is prior art under Art 54(3) EPC, shows another gas turbine engine.

### SUMMARY

According to the present invention, there is provided a gas turbine engine as claimed in claim 1.

In an embodiment of the above, the fan section delivers a portion of air into a bypass duct and a portion of the air into the low pressure compressor as core flow, and has a bypass ratio greater than 6.

In another embodiment according to any of the previous embodiments, a star gear is utilized to change the direction of rotation between the fan and the low pressure spool.

In another embodiment according to any of the previous embodiments, there is an intermediate turbine section, which drives a second compressor rotor.

These and other features may be best understood from the following drawings and specification.

### BRIEF DESCRIPTION OF THE DRAWINGS

Figure 1 schematically shows a gas turbine engine not covered by the claims of the present invention.
Figure 2 schematically shows rotational features of one type of such an engine not covered by the claims of the present invention.
Figure 3 is a detail of the turbine section volume.
Figure 4 shows an engine outside the scope of the present invention.
Figure 5 shows an embodiment of the present invention.

### DETAILED DESCRIPTION

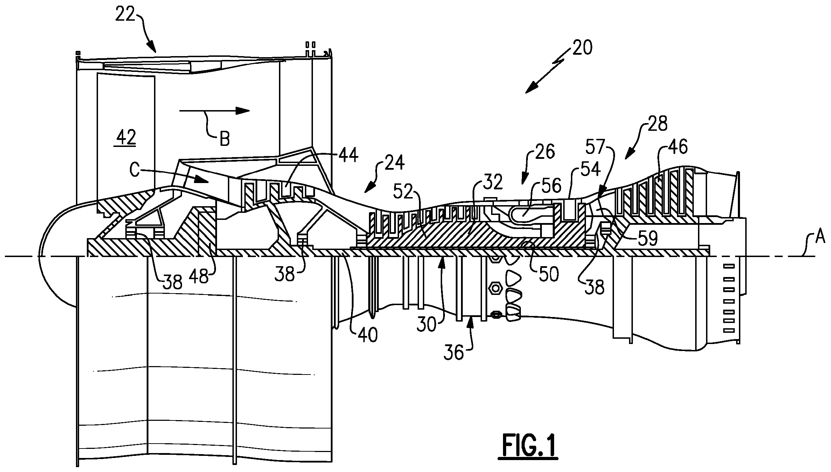

In this specification the non-SI unit "lbf/in³" is used, which may be converted to the respective SI or metric unit according to the following conversion: 1 lbf/in³ = 1 kN/m³ x 271.45. Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include, for example, three-spools, an augmentor section, or a different arrangement of sections, among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines. For purposes of this application, the terms "low" and "high" as applied to speed or pressure are relative terms. The "high" speed and pressure would be higher than that associated with the "low" spools, compressors or turbines, however, the "low" speed and/or pressure may actually be "high."

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a geared architecture 48 to drive the fan 42 at a lower speed than the low speed spool 30. The high speed spool 32 includes an outer shaft 50 that interconnects a high pressure compressor 52 and high pressure turbine 54. The terms "high" and "low" in relation to both the speed and pressure of the components are relative to each other, and not to an absolute value. A combustor 56 is arranged between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow C is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path and act as inlet stator vanes to turn the flow to properly feed the first blades of the low pressure turbine. The turbines 46, 54 rotationally drive the respective low speed spool 30 and high speed spool 32 in response to the expansion.

The engine 20 has bypass airflow B, and in one example is a high-bypass geared aircraft engine. The bypass ratio may be defined as the amount of air delivered into the bypass duct divided by the amount delivered into the core flow. In a further example, the engine 20 bypass ratio is greater than about six (6:1), with an example embodiment being greater than ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 and the low pressure turbine has a pressure ratio that is greater than about five (5:1). Low pressure turbine 46 pressure ratio is the total pressure measured prior to inlet of low pressure turbine 46 as related to the pressure at the outlet of the low pressure turbine 46 prior to an exhaust nozzle. The geared architecture 48 may be a star gear arrangement such that the fan will rotate in a different direction than the low spool. It should be understood, however, that the above parameters are only exemplary of one embodiment of a geared architecture engine and that the present invention is applicable to other gas turbine engines including direct drive turbofans.

A greatest amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned per hour divided by lbf of thrust the engine produces at that minimum point. "Low fan pressure ratio" is the pressure ratio across the fan blade alone, before the Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram deg R) / 518.7)^0.5] (where deg R = K x 9/5). The "Low corrected fan tip speed" as disclosed herein according to one non-limiting embodiment is less than about 1150 ft / second (350.5 m/s) at the same cruise point.

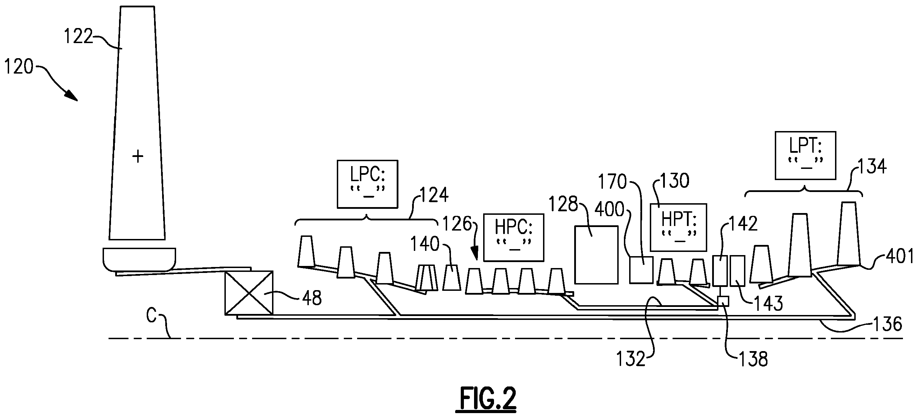

Figure 2 shows detail of an engine 120, which may generally have the features of engine 20 of Figure 1. A fan 122 is positioned upstream of a low pressure compressor 124, which is upstream of a high pressure compressor 126. A combustor 128 is positioned downstream of the high pressure compressor 126. A mid-turbine frame 142 may be positioned at a downstream end of the high pressure turbine 130, and supports a bearing 138, shown schematically, to support the aft end of the high pressure turbine 130, and a high pressure spool 132. A low pressure turbine 134 is positioned downstream of a mid-turbine frame 142. A low spool 136, driven by the low pressure turbine 134, drives the low pressure compressor 124. The speed change mechanism 48 causes the fan 122 to rotate at a different speed than the low pressure compressor 134. In embodiments of this invention, the speed input to output ratio for the speed change mechanism is above or equal to 2.3:1, and up to less than or equal to 13:1. The gear also causes fan 122 to rotate in an opposed direction relative to the low pressure compressor 124. As mentioned above, a star gear arrangement may be utilized to cause the fan 122 to rotate in the opposed direction ("+") relative to the low pressure compressor 124. In this embodiment the fan generally has less than 26 blades, and the low pressure turbine has at least three stages, and up to six stages. The high pressure turbine generally has one or two stages as shown.

In this particular embodiment, the low pressure compressor 124 and the low pressure turbine 134 rotate in one direction ("-") and the high pressure turbine 130, the high pressure compressor 126, rotate in the same direction ("-").

A strut 140 is shown between the low pressure compressor 124 and the high pressure compressor 126. The strut 140 spans the gas path, and has an airfoil shape, or at least a streamline shape. The combination of a blade at the exit of the low pressure compressor 124, the strut 140, and a variable vane, and then the first blade of the high pressure compressor 126 is generally encompassed within the structure illustrated as the strut 140.

Since the compressor sections 124 and 126 rotate in the same direction, the several airfoils illustrated as the element 140 are required to do less turning of the air flow.

As will be explained below, since the turbine section is provided with a highly cambered vane, there is less turning required between the two turbine sections. Since the compressor is forcing flow with an adverse pressure gradient, and whereas the turbine has a favorable pressure gradient, this overall engine architecture is benefited by the illustrated combination.

Highly cambered inlet guide vanes 143 are positioned in a location intermediate the mid-turbine frame 142 and the most upstream rotor in the low pressure turbine 134. The vanes 143 must properly direct the products of combustion downstream of the high pressure turbine 130 as they approach the first rotor of the low pressure turbine 134. It is desirable for reducing the overall size of the low pressure turbine that the flow be properly directed when it initially encounters the first stage of the low pressure turbine section.

The above features achieve a more compact turbine section volume relative to the prior art, including both the high and low pressure turbines. A range of materials can be selected. As one example, by varying the materials for forming the low pressure turbine, the volume can be reduced through the use of more expensive and more exotic engineered materials, or alternatively, lower priced materials can be utilized. In three exemplary embodiments the first rotating blade of the Low Pressure Turbine can be a directionally solidified casting blade, a single crystal casting blade or a hollow, internally cooled blade. All three embodiments will change the turbine volume to be dramatically smaller than the prior art by increasing low pressure turbine speed. In addition, high efficiency blade cooling may be utilized to further result in a more compact turbine section.

Due to the compact turbine section, a power density, which is defined as thrust in pounds force produced divided by the volume of the entire turbine section, is optimized. The volume of the turbine section is defined by an inlet of a first turbine vane in the high pressure turbine to the exit of the last rotating airfoil in the low pressure turbine, and is expressed in cubic inches. The static thrust at the engine's flat rated Sea Level Takeoff condition divided by a turbine section volume is defined as power density. The sea level take-off flat-rated static thrust is defined in lbs force, while the volume is the volume from the annular inlet of the first turbine vane in the high pressure turbine to the annular exit of the downstream end of the last rotor section in the low pressure turbine. The maximum thrust is Sea Level Takeoff Thrust "SLTO thrust" which is commonly defined as the flat-rated static thrust produced by the turbofan at sea-level.

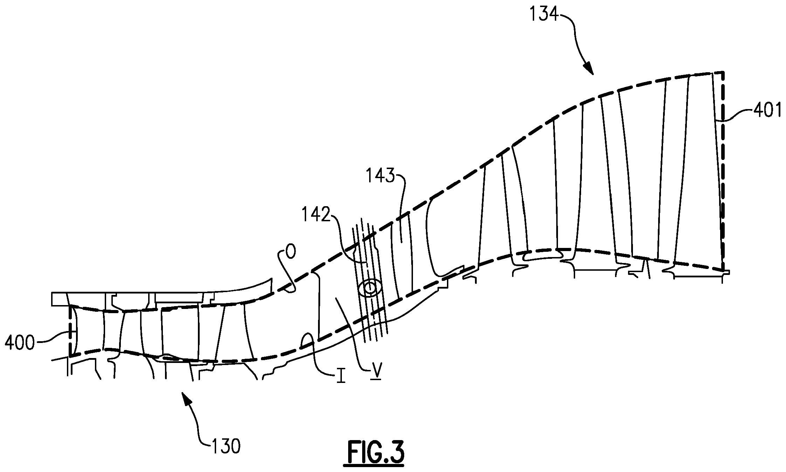

The volume V of the turbine section may be best understood from Figure 3. As shown, the frame 142 and vane 143 are intermediate the high pressure turbine section 130, and the low pressure turbine section 134. The volume V is illustrated by dashed line, and extends from an inner periphery I to an outer periphery O. The inner periphery is somewhat defined by the flowpath of the rotors, but also by the inner platform flow paths of vanes. The outer periphery is defined by the stator vanes and outer air seal structures along the flowpath. The volume extends from a most upstream end of the vane 400, typically its leading edge, and to the most downstream edge 401 of the last rotating airfoil in the low pressure turbine section 134. Typically this will be the trailing edge of that airfoil.

The power density in the disclosed gas turbine engine is much higher than in the prior art. Eight exemplary engines are shown below which incorporate turbine sections and overall engine drive systems and architectures as set forth in this application, and can be found in Table I as follows:

**TABLE 1**

| Engine | Thrust SLTO (lbf) | Turbine section volume from the Inlet | Thrust/turbine section volume (lbf/in³) |
|---|---|---|---|
| 1 | 17,000 | 3,859 | 4.41 |
| 2 | 23,300 | 5,330 | 4.37 |
| 3 | 29,500 | 6,745 | 4.37 |
| 4 | 33,000 | 6,745 | 4.84 |
| 5 | 96,500 | 31,086 | 3.10 |
| 6 | 96,500 | 62,172 | 1.55 |
| 7 | 96,500 | 46,629 | 2.07 |
| 8 | 37,098 | 6,745 | 5.50 |

The power density is greater than or equal to about 4.0 lbf/in³. More narrowly, the power density is greater than or equal to about 4.5 lbf/in³. Even more narrowly, the power density is greater than or equal to about 4.75 lbf/in³. Even more narrowly, the power density is greater than or equal to about 5.0 lbf/in³.

Also, in embodiments, the power density is less than or equal to about 5.5 lbf/in³.

While certain prior engines have had power densities greater than 1.5, and even greater than 3.2, such engines have been direct drive engines and not associated with a gear reduction. In particular, the power density of an engine known as PW4090 was about 1.92 lbf/in³, while the power density of an engine known as V2500 had a power density of 3.27 lbf/in³.

Engines made with the disclosed architecture, and including turbine sections as set forth in this application, and with modifications coming from the scope of the claims in this application, thus provide very high efficient operation, and increased fuel efficiency and lightweight relative to their trust capability.

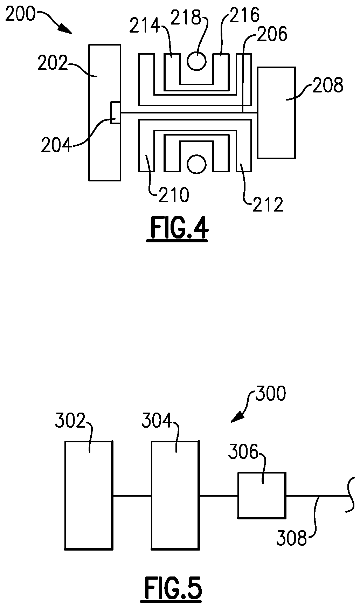

Figure 4 shows an engine 200, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 5 shows an embodiment 300 according to the present invention wherein a fan rotor 302 and a first stage compressor 304 rotate at a common speed. The gear reduction 306 (which may be structured as disclosed above) is intermediate the compressor rotor 304 and a shaft 308 which is driven by a low pressure turbine section.

The Figure 4 or 5 engines may be utilized with the density features disclosed above.

Although an embodiment of this invention has been disclosed, a person of ordinary skill in this art would recognize that certain modifications would come within the scope of this application. For that reason, the following claims should be studied to determine the true scope and content of this invention.

## Claims

1. A gas turbine engine (300) comprising:
a high pressure turbine (54) configured to rotate with a high pressure compressor (52) as a high pressure spool (32) in a first direction about a central axis (A);
a low pressure turbine (44) configured to rotate in said first direction about said central axis (A);
a power density that is greater than or equal to about 4.0 lbf/in³ (1085.8 kN/m³) the power density being defined as the static thrust at the engine's flat rated Sea Level Takeoff condition in pounds-force divided by the turbine section volume in cubic inches, the turbine section volume being the volume from an annular inlet of a first turbine vane in the high pressure turbine (54) to an annular exit of a downstream end of a last rotor section in the low pressure turbine (44); and
a fan (302) connected to the low pressure turbine (44) via a gear reduction (306) for rotation in a second direction opposed to said first direction,
**characterised in that**:
the gear reduction (306) is positioned intermediate the low pressure turbine (44) and a compressor rotor (304) driven by the low pressure turbine (44).

2. The engine (300) as set forth in claim 1, wherein said fan (302) delivers a portion of air into a bypass duct (B) and a portion of the air into a low pressure compressor (46) as core flow (C), and has a bypass ratio greater than 6.

3. The engine (300) as set forth in claim 1 or 2, wherein a star gear is utilized to change the direction of rotation between said fan (302) and said low pressure turbine (44).

4. The engine (300) as set forth in any of claims 1 to 3, wherein there is an intermediate turbine section, and the intermediate turbine section drives a second compressor rotor.

## Patentansprüche

1. Gasturbinentriebwerk (300), umfassend:
eine Hochdruckturbine (54), die dazu konfiguriert ist, mit einem Hochdruckkompressor (52) als Hochdruckabschnitt (32) in einer ersten Richtung um eine Mittelachse (A) zu rotieren;
eine Niederdruckturbine (44), die dazu konfiguriert ist, in der ersten Richtung um die Mittelachse (A) zu rotieren;
eine Leistungsdichte, die größer oder gleich etwa 4,0 lbf/in³ (1085,8 kN/m³) ist, wobei die Leistungsdichte definiert ist als der statische Schub im flachen Startbemessungszustand des Triebwerks auf Meereshöhe in Pfund-Kraft dividiert durch das Turbinenabschnittsvolumen in Kubikzoll, wobei das Turbinenabschnittsvolumen das Volumen von einem ringförmigen Einlass einer ersten Turbinenleitschaufel in der Hochdruckturbine (54) bis zu einem ringförmigen Auslass eines stromabwärtigen Endes eines letzten Rotorabschnitts in der Niederdruckturbine (44) ist; und
einen Fan (302), der über ein Untersetzungsgetriebe (306) zur Rotation in einer zweiten Richtung, die der ersten Richtung entgegengesetzt ist, mit der Niederdruckturbine (44) verbunden ist,
**dadurch gekennzeichnet, dass**:
das Untersetzungsgetriebe (306) zwischen der Niederdruckturbine (44) und einem durch die Niederdruckturbine (44) angetriebenen Kompressorrotor (304) angeordnet ist.

2. Triebwerk (300) nach Anspruch 1, wobei der Fan (302) einen Teil der Luft in einen Bypasskanal (B) und einen Teil der Luft als Kernströmung (C) in einen Niederdruckkompressor (46) fördert und ein Bypassverhältnis von mehr als 6 aufweist.

3. Triebwerk (300) nach Anspruch 1 oder 2, wobei ein Sterngetriebe verwendet wird, um die Rotationsrichtung zwischen dem Fan (302) und der Niederdruckturbine (44) zu ändern.

4. Triebwerk (300) nach einem der Ansprüche 1 bis 3, wobei ein Zwischenturbinenabschnitt vorliegt und der Zwischenturbinenabschnitt einen zweiten Kompressorrotor antreibt.

## Revendications

1. Moteur à turbine à gaz (300) comprenant :
une turbine haute pression (54) conçue pour tourner avec un compresseur haute pression (52) en tant que bobine haute pression (32) dans un premier sens autour d'un axe central (A) ;
une turbine basse pression (44) conçue pour tourner dans ledit premier sens autour dudit axe central (A) ;
une densité de puissance supérieure ou égale à environ 4,0 lbf/in³ (1 085,8 kN/m³), la densité de puissance étant définie comme la poussée statique dans les conditions nominales plates de décollage du moteur au niveau de la mer,
en livres-force divisée par le volume de la section de turbine en pouces cubes, le volume de la section de turbine étant le volume depuis une entrée annulaire d'une première aube de turbine dans la turbine haute pression (54) jusqu'à une sortie annulaire d'une extrémité aval d'une dernière section de rotor dans la turbine basse pression (44) ; et
un ventilateur (302) relié à la turbine basse pression (44) via un démultiplicateur (306) pour tourner dans un second sens opposé audit premier sens,
**caractérisé en ce que** :
le démultiplicateur (306) est positionné entre la turbine basse pression (44) et un rotor de compresseur (304) entraîné par la turbine basse pression (44).

2. Moteur (300) selon la revendication 1, dans lequel ledit ventilateur (302) délivre une partie de l'air dans un conduit de dérivation (B) et une partie de l'air dans un compresseur basse pression (46) sous forme de flux central (C), et a un rapport de dérivation supérieur à 6.

3. Moteur (300) selon la revendication 1 ou 2, dans lequel un engrenage en étoile est utilisé pour changer le sens de rotation entre ledit ventilateur (302) et ladite turbine basse pression (44).

4. Moteur (300) selon l'une quelconque des revendications 1 à 3, dans lequel il y a une section de turbine intermédiaire, et la section de turbine intermédiaire entraîne un second rotor de compresseur.
